# EUROPEAN PATENT APPLICATION

(11) **EP 4 687 179 A1**
(43) Date of publication of application: **04.02.2026**
(21) Application number: 24222687.6
(22) Date of filing: 21.12.2024
(51) Int. Cl.: H01M 4/06, H01M 4/08, H01M 6/02, H01M 6/16, H01M 4/40

(54) **LITHIUM PRIMARY BUTTON CELL, PREPARATION METHOD THEREOF, AND ELECTRONIC DEVICE**

(30) Priority: 31.07.2024 CN 202411045595; 31.07.2024 CN 202421847565 U; 19.09.2024 WO PCT/CN2024/119678
(71) Applicant: Eve Energy Co., Ltd., Huizhou, Guangdong 516006 (CN)
(72) Inventor: DENG, Huihui, HUIZHOU 516006 (CN); HAN, Dandan, HUIZHOU 516006 (CN); SUN, Peiling, HUIZHOU 516006 (CN); WANG, Pingao, HUIZHOU 516006 (CN); ZHANG, Lixing, HUIZHOU 516006 (CN); TAN, Yaning, HUIZHOU 516006 (CN); CAO, Lang, HUIZHOU 516006 (CN); ZHU, Yuan, HUIZHOU 516006 (CN)
(74) Representative: Regimbeau

(57) **Abstract**

Provided are a lithium primary button cell, a preparation method thereof, and an electronic device. The lithium primary button cell includes a cell housing (10) and a cell core assembly located within the cell housing (10). The cell core assembly includes a negative electrode (3), a negative electrode modification film (4), separators (5, 6), and a positive electrode (7) that are stacked sequentially. The surface of one side of the negative electrode (3) facing the negative electrode modification film (4) is formed with a concave groove (9) into which the negative electrode modification film (4) is tightly embedded. In the present application, the structure and materials of the lithium primary button cell are optimized so that the lithium primary button cell can have excellent discharging performance and good stability and reliability.

## Description

### TECHNICAL FIELD

The present application relates to the technical field of battery materials and, in particular, to a lithium primary button cell, a preparation method thereof, and an electronic device.

### BACKGROUND

Lithium primary cells are high-energy chemical primary cells and commonly known as lithium cells. In the lithium primary cells, metallic lithium is used as negative electrodes, solid salts or salts dissolved in organic solvents are used as electrolytes, and metal oxides or other solid or liquid oxidants are used as positive active substances. The lithium primary cells are widely used in various fields such as smart meters, smart transportation, smart security, and medical equipment. With the wide application of the Internet of Things technology, users' application environments have become more and more stringent, and the requirements for the output capacity and stability of the cells in extreme environments have become increasingly high. Therefore, the requirement for the structural stability of cell cores throughout their life cycles is also increasing.

The extreme environments mainly include extreme conditions such as high temperature, low temperature, high pressure, and strong vibration. These extreme environmental conditions place higher demands on the performance and reliability of the cells. For example, in low temperature environments, the materials of the cells need to have better low temperature performance to avoid dissolution phenomena and shuttle effects of positive electrode active ions, as well as side reactions between materials of electrodes and the electrolytes, to maintain the stability and reliability of the cells. In high pressure environments, the structures of the cells need to be stronger and safer to prevent the cells from being ruptured and exploding. In strong vibration environments, the structures and securing manners of the cells need to be more stable and reliable to prevent the cells from being shifted or falling off. Therefore, to be adapted to the preceding extreme environments, optimization and improvement are required in terms of materials, structures, and management systems.

### TECHNICAL PROBLEM

Based on the preceding situation, on one hand, the related art discloses that carbon material layers are disposed within the cells, thereby reducing the side reactions within the cells and improving the conductivity and finally reducing internal resistances of the cells, but the carbon material layers are prone to fall off, have insufficient strengths, and have gaps with the electrodes; on the other hand, the related art further discloses that electrode layers with a good affinity or conductivity are prepared, but a special process is required, and the requirements for the process and materials are high, so the electrode layers cannot be mass-produced.

### SUMMARY

In a first aspect, an embodiment of the present application provides a lithium primary button cell. The lithium primary button cell includes a cell housing and a cell core assembly located within the cell housing. The cell core assembly includes a negative electrode, a negative electrode modification film, a separator, and a positive electrode that are stacked sequentially.

A surface of one side of the negative electrode facing the negative electrode modification film is formed with a concave groove into which the negative electrode modification film is tightly embedded.

In a second aspect, an embodiment of the present application provides a method for preparing the lithium primary button cell described in the first aspect. The method includes: punching a negative electrode modification film into a negative electrode with a concave groove formed on a surface of the negative electrode to form a precursor material; sequentially stacking the precursor material, a separator, and a positive electrode to obtain a cell core assembly; and encapsulating the cell core assembly and a cell housing to obtain the lithium primary button cell.

In a third aspect, an embodiment of the present application provides an electronic device including the lithium primary button cell described in the first aspect.

### Beneficial Effects

The present application provides the lithium primary button cell. First, in the present application, the surface of the negative electrode is formed with the concave groove so that the negative electrode modification film can be tightly embedded into the concave groove, and the present application has the following effects: ① The lamination tightness, lamination flatness and center alignment between the negative electrode modification film and the negative electrode can be improved, not only ensuring the structural stability of the cell core assembly, but also improving the structural stability of the cell core assembly in reliability testing; for example, under long-term vibration, drop or centrifugal environment testing at room temperature or high temperature, there is still no displacement between the negative electrode and the negative electrode modification film, thereby enhancing the lamination stability between the negative electrode modification film and the negative electrode at a high discharging depth and ensuring the stability of large current discharging or pulse discharging performance of the cell core assembly at room temperature and extremely low temperature; ② a storage space for accommodating the negative electrode modification film is reserved within the negative electrode, not only ensuring that the negative electrode modification film cannot be deformed during the punching process, but also improving the flatness of the entire material composite surface of the negative electrode.

Second, the negative electrode modification film provided in the present application has the following advantages: ① The negative electrode modification film has a porous structure. On one hand, due to the influence of a potential during the reaction of the cell, a positive electrode active substance reacts with some minor components in a nonaqueous electrolyte to form free cations or anions. Moreover, since the liquid absorption capacity of the separator is stronger than the liquid absorption capacity of the positive electrode active substance in the cell, the concentration polarization effect exists, which makes it possible for dissolved positive electrode active substance ions to shuttle through the separator, thereby causing an irreversible side reaction with the negative electrode to form a reaction interface of a high internal resistance. The negative electrode modification film provided in the present application has a strong ion adsorption function due to the abundant mesopores and micropores, which can well adsorb dissolved positive electrode active ions in a pore structure and finally effectively prevent the dissolved positive electrode active ions from being transferred to the surface of the negative electrode for a side reaction. On the other hand, some components in the nonaqueous electrolyte further react with the negative electrode to form a solid electrolyte interphase (SEI) film which is easily broken down in the early cycle of the cell, and in the later cycle, as the negative electrode is continuously consumed, interfacial impedances between the SEI film and the separator and the positive electrode also increase. In this case, if the negative electrode contacts too much free electrolyte, a high-impedance interfacial film is easier to form, obstructing ion transmission. The porous structure in the negative electrode modification film provided in the present application has strong adsorption performance and thereby can adsorb the free electrolyte in the modification film at the end of discharging, thereby reducing the degree of the free electrolyte contacting the negative electrode and improving the discharging performance of the cell. Moreover, the pore structure of the negative electrode modification film may be freely regulated according to the selection of raw materials and processing techniques of the film.② The negative electrode modification film is a multifunctional layer. The modification film has good conductivity and can form a near-capacitor structure with a positive electrode layer, thereby having certain capacitive characteristics. When the cell is in a low temperature environment, the preceding capacitor structure can provide a certain amount of charges at the instant of the reaction. Moreover, a benign contact is generated between the modification film and the negative electrode, and a certain affinity action is formed between particles, thereby changing the original state of a passivation layer so that when electrons are turned on, lithium ions can easily pass through the passivation layer to ensure that the ions can penetrate the passivation layer, thereby shortening the ion conduction and thus increasing the instantaneous recovery voltage value. Moreover, the modification layer can increase the conduction rate of ions and electrons of the cell during the discharging process, ensuring that the cell can have a large current output capability. Additionally, the negative electrode modification film provided in the present application has a good affinity with the negative electrode and can modify the passivation layer on the surface of the negative electrode, thereby better protecting the negative electrode from erosion by dissolved positive electrode cations.③ The negative electrode modification film has high strength and good flexibility. The tensile strength of a prepared negative electrode sheet is as high as 0.4 kN/m to 0.5 kN/m, which can ensure the integrity of the negative electrode modification film during the cutting process of the electrode sheet, the processability of the negative electrode modification film during the assembly process of the cell and the integrity of the negative electrode modification film during the encapsulation of the cell. Moreover, due to the good flexibility of the negative electrode modification film, when the negative electrode modification film is laminated with the negative electrode, the stress between the negative electrode modification film and the negative electrode can be reduced to avoid uneven lamination and the uneven lamination surface, and the lamination cannot dissolve or deform under the infiltration of the nonaqueous electrolyte and after deep discharging.
④The negative electrode modification film has high flatness, and the deviation of the thickness range of the negative electrode modification film is only within 3 µm, which reduces the process difficulty when the negative electrode modification film is embedded into the surface of the negative electrode, ensures the lamination flatness of the negative electrode modification film and the negative electrode, reduces the gap between the negative electrode modification film and the negative electrode, and finally improves the interfacial contact performance between the negative electrode modification film and the negative electrode.
⑤ The negative electrode modification film is a self-supporting and integrated function film, which can not only reduce an interfacial resistance of the ion conduction, but also avoid a side reaction between the negative electrode modification film and the cell system or the insufficient effective space for the cell core assembly due to the introduction of other matrix materials. Additionally, the processing technique of the negative electrode modification film provided in the present application is simple, and the thickness of the negative electrode modification film is not affected by the thickness of a matrix layer. The overall thickness can be as low as 30 µm, and the uniformity of the negative electrode modification film is also not affected by the material and flatness of a substrate layer.

### BRIEF DESCRIPTION OF THE DRAWINGS

FIG. 1 is a diagram illustrating the structure of a lithium primary button cell according to the present application, where a positive electrode is directly prepared by punching into a sheet.
FIG. 2 is a diagram illustrating the structure of a lithium primary button cell according to the present application, where a positive electrode is prepared by punching a current collector ring on the surface of a positive electrode active substance layer.
FIG. 3 is a cross-section exploded view of a lithium primary button cell according to the present application.
FIG. 4 is a partial enlarged view of a circled portion of FIG. 3.
FIG. 5 is a diagram illustrating the assembly of a precursor material in a lithium primary button cell according to the present application.
FIG. 6 is a flowchart of a method for preparing a lithium primary button cell according to the present application.

### Reference list

- 1: sealing ring
- 2: negative electrode bottom cover
- 3: negative electrode
- 4: negative electrode modification film
- 5: glass fiber separator
- 6: polypropylene separator
- 7: positive electrode
- 8: positive electrode cover
- 9: concave groove
- 10: cell housing

### DETAILED DESCRIPTION

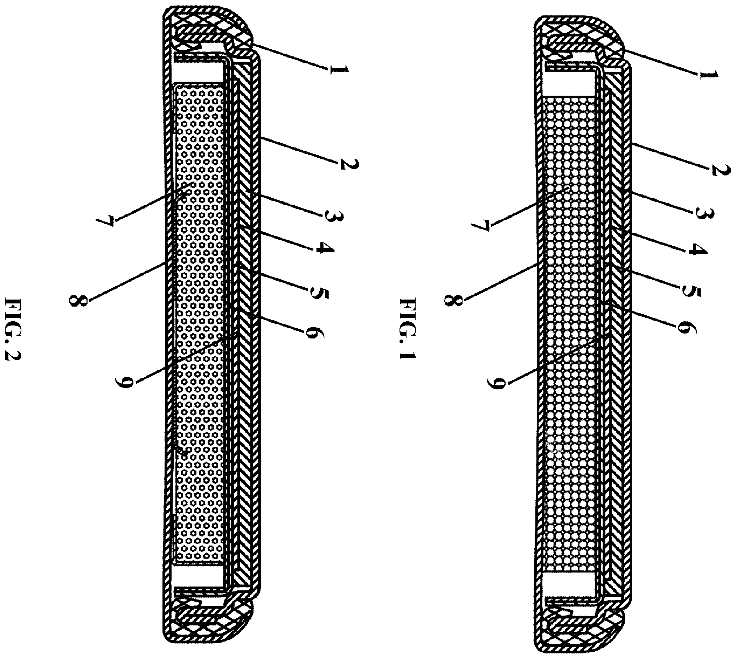

As shown in FIGS. 1 to 4, the present application provides a lithium primary button cell. The lithium primary button cell is applied to an electronic device and includes a cell housing 10 and a cell core assembly located within the cell housing 10. The cell core assembly includes a negative electrode 3, a negative electrode modification film 4, separators 5 and 6, and a positive electrode 7 that are stacked sequentially. The surface of one side of the negative electrode 3 facing the negative electrode modification film 4 is formed with a concave groove 9 into which the negative electrode modification film 4 is tightly embedded.

The shape of the concave groove 9 includes any one or a combination of at least two of a circle, a ring, or a regular polygon, for example, a circle. Exemplarily, the regular polygon includes a square, a regular pentagon, or a regular hexagon. The center of the concave groove 9 coincides with the center of the vertical projection surface of the negative electrode modification film 4. The ratio of the area of the negative electrode modification film 4 to the area of the concave groove 9 is 1:1.

The ratio of the area of the negative electrode modification film 4 to the area of the negative electrode 3 is (0.2 to 0.99):1, which may be (0.3 to 0.6):1, for example, 0.2:1, 0.22:1, 0.25:1, 0.28:1, 0.3:1, 0.32:1, 0.35:1, 0.38:1, 0.4:1, 0.42:1, 0.45:1, 0.48:1, 0.5:1, 0.52:1, 0.55:1, 0.58:1, 0.6:1, 0.65:1, 0.7:1, 0.75:1, 0.78:1, 0.8:1, 0.82:1, 0.85:1, 0.88:1, 0.9:1, 0.925:1, 0.93:1, 0.935:1, 0.94:1, 0.945:1, 0.95:1, 0.955:1, 0.96:1, 0.965:1, 0.97:1, 0.975:1, 0.98:1, 0.985:1, or 0.99:1.

The ratio of the area of the negative electrode modification film to the area of the negative electrode is regulated so that the functionality of the negative electrode modification film can be fully exerted. If the area ratio is too low, the functionality of the negative electrode modification film is weakened due to a decrease in the area of a modification region. For example, an increase in the conductivity of the conductive surface is small, and the adsorption area decreases accordingly, resulting in a lower adsorption capacity of the dissolved positive electrode active ions. Conversely, the negative electrode modification film is not well riveted due to the small distance of the concave edge. Additionally, if the area is too large, the functionality of the negative electrode modification film is not significantly improved, which also leads to an increase in the process cost.

The ratio of the depth of the concave groove 9 to the thickness of the negative electrode modification film 4 is (0.3 to 1.3):1, which may be (0.95 to 1.05):1, for example, 0.3:1, 0.4:1, 0.5:1, 0.6:1, 0.7:1, 0.8:1, 0.90:1, 0.91:1, 0.92:1, 0.93:1, 0.94:1, 0.95:1, 0.96:1, 0.97:1, 1:1, 1.02:1, 1.03:1, 1.04:1, 1.05:1, 1.06:1, 1.07:1, 1.08:1, 1.1:1, 1.12:1, 1.15:1, 1.18:1, 1.2:1, 1.22:1, 1.25:1, 1.28:1, or 1.3:1.

The ratio of the depth of the concave groove to the thickness of the negative electrode modification film is regulated so that the negative electrode modification film and the surface of the negative electrode can be completely flush and have good physical bonding. When the depth of the concave groove is too deep, during the leveling process, the downward degree of pressure on the upper surface of the negative electrode modification film is small, which leads to a certain air gap surface as a result of weak bonding, unflatness or insufficient exhaust between the lower surface of the negative electrode modification film and the negative electrode within the concave groove; when the depth of the concave groove is too shallow, and the thickness of the negative electrode modification film is too large, during the leveling process, since the negative electrode modification film is too thick, the space in the concave groove is insufficient, the negative electrode modification film is stretched laterally during downward leveling, and even the surface of the negative electrode overflows, resulting in unflatness. Additionally, the size of the negative electrode and the negative electrode modification film is too high, affecting the size of the entire cell core.

The thickness of the negative electrode modification film 4 ranges from 0.03 mm to 0.20 mm, which may be from 0.05 mm to 0.10 mm, for example, 0.03 mm, 0.04 mm, 0.05 mm, 0.06 mm, 0.07 mm, 0.08 mm, 0.09 mm, 0.10 mm, 0.11 mm, 0.12 mm, 0.13 mm, 0.14 mm, 0.15 mm, 0.16 mm, 0.17 mm, 0.18 mm, 0.19 mm, or 0.20 mm.

The thickness of the negative electrode modification film is adjusted so that the functionality of the negative electrode modification film can be satisfied while ensuring the assembly feasibility of the entire cell core and sufficient capacity design. If the thickness is too small, on one hand, the processing difficulty of the negative electrode modification film increases, which increases the production cost and the assembling and processing difficulty of the negative electrode modification film during the assembly process; on the other hand, the adsorption capacity of the dissolved positive electrode active ions decrease accordingly. Conversely, if the thickness is too large, the structural design space of the negative electrode is occupied, thereby reducing the design capacity of the entire cell core.

The tensile strength of the negative electrode modification film 4 ranges from 0.1 KN/m to 2 KN/m, which may be from 0.4 KN/m to 0.5 KN/m, for example, 0.1 KN/m, 0.2 KN/m, 0.3 KN/m, 0.4 KN/m, 0.42 KN/m, 0.45 KN/m, 0.48 KN/m, 0.5 KN/m, 0.8 KN/m, 1 KN/m, 1.2 KN/m, 1.5 KN/m, 1.8 KN/m, or 2 KN/m.

The tensile strength of the negative electrode modification film is regulated so that the negative electrode modification film can have excellent mechanical processing performance including cutting, transportation positioning, or leveling. If the tensile strength is too low, the implementation of the entire processing process and the consistency of assembly are affected, and even since the negative electrode modification film has poor strength or is easy to damage, the lamination of the negative electrode modification film decreases with the increase of the discharging depth. Conversely, a diaphragm is too large, which affects some functionality of the negative electrode modification film, such as a decrease in the conductivity and a decrease in the adsorption capacity of the dissolved positive electrode active ions. Since a manner to increase the tensile strength of the negative electrode modification film includes an increase in the content of an adhesive, this leads to a decrease in the content of conductive components and similarly, a decrease in the porosity of the negative electrode modification film.

The area density of the negative electrode modification film 4 ranges from 40 g/cm² to 80 g/cm², which may be from 50 g/cm² to 60 g/cm², for example, 40 g/cm², 45 g/cm², 50 g/cm², 52 g/cm², 55 g/cm², 58 g/cm², 60 g/cm², 65 g/cm², 70 g/cm², 75 g/cm², or 80 g/cm².

The area density of the negative electrode modification film is regulated so that the negative electrode modification film can have excellent comprehensive functionality. If the area density is too low, the film strength is poor. As the reaction of the cell core proceeds to the end of the discharging, the functionality of the negative electrode modification film decreases rapidly. Conversely, the porosity of the negative electrode modification film decreases accordingly, resulting in the decrease in the adsorption capacity of the dissolved positive electrode active ions. Similarly, a negative electrode modification film component contains a high content of non-conductive adhesive components, thereby resulting in a decrease in the conductivity of the negative electrode modification film. The pore volume of the negative electrode modification film 4 ranges from 0.05 cm³/g to 0.5 cm³/g, which may be from 0.15 cm³/g to 0.33 cm³/g, for example, 0.05 cm³/g, 0.08 cm³/g, 0.1 cm³/g, 0.12 cm³/g, 0.15 cm³/g, 0.18 cm³/g, 0.2 cm³/g, 0.22 cm³/g, 0.25 cm³/g, 0.28 cm³/g, 0.3 cm³/g, 0.33 cm³/g, 0.35 cm³/g, 0.4 cm³/g, 0.45 cm³/g, or 0.5 cm³/g.

The pore volume of the negative electrode modification film is regulated so that the functionality of the modification film can be fully exerted. The pore volume of the modification film is also affected by the material model, the ratio of components, and a processing manner. If the pore volume is too small, the adsorption capacity of the dissolved positive electrode active ions decreases, which is mainly reflected in the fact that the adsorption amount is too small and the adsorption amount soon reaches saturation. Conversely, the adsorption efficiency of the dissolved positive electrode active ions becomes low.

Materials of the negative electrode modification film 4 include an active material. The active material includes at least one of an oxide material, a carbon material, a metal conductive particle, or a fluorine-containing particle, such as the oxide material and/or the carbon material. The oxide material includes any one or a combination of at least two of titanium dioxide, molybdenum dioxide, aluminum oxide, lithium titanate, or silver oxide. The carbon material includes any one or a combination of at least two of graphene, acetylene black, a carbon nanotube, activated carbon, or graphite. The metal conductive particle includes any one or a combination of at least two of a copper particle, a silver particle, or a gold particle. The fluorine-containing particle includes any one or a combination of at least two of lithium fluoride, carbon fluoride, polytetrafluoroethylene, polyvinylidene fluoride, or a polyvinyl fluoride copolymer.

The materials of the negative electrode modification film 4 further include an adhesive. The adhesive includes at least one of polytetrafluoroethylene, polyvinylidene fluoride, a fluorinated ethylene propylene copolymer, or polyacrylic acid.

The ratio of the mass of the active material to the mass of the adhesive is 1:(0.03 to 0.3), which may be 1:(0.05 to 0.25), for example, 1:0.03, 1:0.05, 1:0.08, 1:0.1, 1:0.12, 1:0.15, 1:0.18, 1:0.2, 1:0.22, 1:0.25, 1:0.28, or 1:0.3.

The ratio of the mass of the active material to the mass of the adhesive is regulated so that the negative electrode modification film can have excellent functionality such as conductivity, adsorption, and flexible self-support. If the mass ratio is too low, the negative electrode modification film may not be self-supporting for molding or may have poor film strength. Conversely, the negative electrode modification film may have poor conductivity, a low adsorption capacity of the positive electrode active ions, and a reduced proportion of other materials.

In a method for preparing the negative electrode modification film, the active material and the adhesive are subjected to compression molding or extrusion molding. During the molding process, the negative electrode modification film may be prepared without using a solvent, or with using a certain inorganic or organic solvent, depending on the process requirements.

The separators include a glass fiber separator 5 and/or a polypropylene separator 6. Each separator has 1 to 3 layers, which may be 2 layers, for example, 1 layer, 2 layers, or 3 layers. The separators include a combination of the glass fiber separator 5 and the polypropylene separator 6.

The glass fiber separator 5 is disposed on one side facing the negative electrode 3, and the polypropylene separator 6 is disposed on one side facing the positive electrode 7, so as to achieve functionality matching with the negative electrode modification film 4. This is ① the stiffness of the glass fiber separator is less than the stiffness of the polypropylene separator, which facilitates the lamination of the glass fiber separator and the negative electrode modification film; ② the liquid absorption capacity of the glass fiber separator is brought into play: the liquid absorption capacity of the glass fiber separator > the liquid absorption capacity of the negative electrode modification film > the liquid absorption capacity of the polypropylene separator > the liquid absorption capacity of the positive electrode, so concentration polarization with a certain gradient is formed, and the arrangement of glass fiber facilitates the uniform distribution of an electrolyte of the entire cell core. Moreover, the glass fiber separator can serve as the storage interface of the electrolyte, which ensures the amount of free electrolyte at the end of the service life of the cell core, enhances the conductivity of ions, and ensures the pulse capacity of the cell core at extremely low temperature. Additionally, the glass fiber separator can also reduce the storage amount of free electrolyte at the interface of the positive electrode, thereby reducing a dissolution phenomenon of a positive electrode active substance and the storage amount of free electrolyte in the negative electrode modification film and reducing side reactions between the dissolved positive electrode active ions and the negative electrode.

The cell housing 10 includes a negative electrode bottom cover 2 located on one side of the negative electrode 3 and a positive electrode cover 8 located on one side of the positive electrode 7. The negative electrode bottom cover 2 is provided with a sealing ring 1 disposed at the edge engagement joint of the negative electrode bottom cover 2 and the positive electrode cover 8.

The lithium primary button cell further includes the electrolyte.

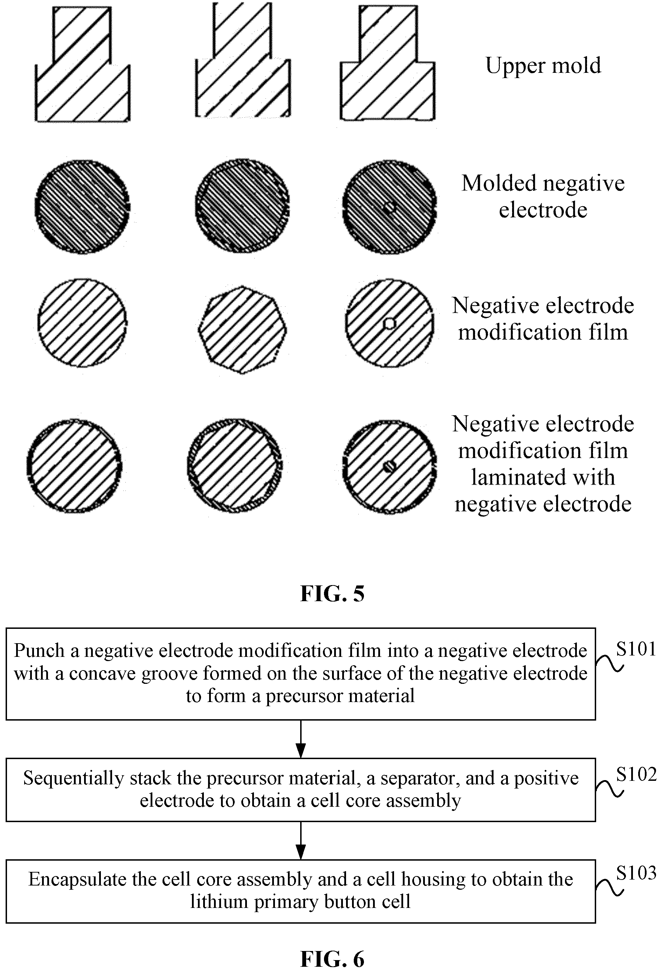

As shown in FIG. 6, the present application further provides a method for preparing a lithium primary button cell. The method includes the steps below.

In S101, a negative electrode modification film is punched into a negative electrode with a concave groove formed on the surface of the negative electrode to form a precursor material.

In S 102, the precursor material, a separator, and a positive electrode are sequentially stacked to obtain a cell core assembly.

In S103, the cell core assembly and a cell housing are encapsulated to obtain the lithium primary button cell.

After the negative electrode modification film is punched into the negative electrode with the concave groove formed on the surface, the method further includes leveling the lamination surface between the negative electrode modification film and the concave groove to fully ensure the lamination and lamination flatness between the negative electrode modification film and the concave groove.

After being cut into a specified shape, the negative electrode modification film is punched into the negative electrode with the concave groove formed on the surface. The positioning requires that the center of the vertical projection surface of the negative electrode modification film completely coincide with the center of the concave groove within the negative electrode to complete the initial flat lamination.

When the depth of the concave groove is not higher than the thickness of the negative electrode modification film, during the leveling process, the negative electrode modification film is first subjected to pressure, and the center of the projection surface of the concave groove and the center of the projection surface of the negative electrode modification film are subjected to a force; due to the conduction of the force, the lower surface of the negative electrode modification film is embedded into and laminated with the upper surface of the concave groove of the negative electrode, and air between the lower surface of the negative electrode modification film and the upper surface of the concave groove is discharged to achieve a completely flat and embedded effect. When the depth of the concave groove is higher than the thickness of the negative electrode modification film, it is equivalent to that the negative electrode modification film is placed within the concave groove of the negative electrode; during the leveling process, a non-concave groove portion of the negative electrode is first subjected to the force, and a central portion of the concave groove is in a state of loss of pressure or underpressure; under the continuous action of downward pressure, the negative electrode is subjected to the pressure and deformed and acts towards a central underpressure region; the final effect is that the negative electrode modification film is tightly laminated within the concave groove and the upper surface of the negative electrode modification film is cohesively embedded by the negative electrode, thereby achieving a flat and laminated effect.

The cell housing includes a negative electrode bottom cover 2 located on one side of the negative electrode 3 and a positive electrode cover 8 located on one side of the positive electrode 7. The negative electrode bottom cover 2 is provided with a sealing ring 1 disposed at the edge engagement joint of the negative electrode bottom cover 2 and the positive electrode cover 8.

The precursor material and separators 5 and 6 are punched into the negative electrode bottom cover.

The separators 5 and 6 are in an inverted U shape, and two sides of the inverted U shape are bent toward the positive electrode 7.

The method further includes injecting an electrolyte after the sequential stacking.

After the electrolyte is injected, the molded positive electrode sheet is placed, the positive electrode cover 8 is covered finally, and the cell is sealed and compressed for the first time and the second time to form the lithium primary button cell.

The positive electrode sheet includes a current collector and a positive electrode active substance layer disposed on at least one side of the current collector. The positive electrode active substance layer includes a positive electrode active substance, a conductive agent, and an adhesive. The positive electrode active substance exemplarily includes manganese dioxide, carbon fluoride, or iron sulfide. The conductive agent exemplarily includes at least one of graphite, a carbon nanotube, conductive carbon black, or graphene. The adhesive exemplarily includes at least one of polytetrafluoroethylene, polyvinylidene fluoride, sodium polyacrylate, polyethylene oxide, or polyacrylonitrile.

The molding process of the positive electrode sheet includes mixing the positive electrode active substance, the conductive agent, and the adhesive uniformly by a high-speed mixing device and then punching them into a sheet by a molding machine for direct use, or punching a current collecting mesh on the surface of the positive electrode active substance layer, or combining with a current collector ring for use.

The material of the negative electrode 3 exemplarily includes lithium metal or lithium alloy.

In the following embodiments and comparative embodiments, the lithium primary button cell is a CR2032 button cell with a diameter of 20 mm and a thickness of 3.2 mm, where the positive electrode sheet has a diameter of 15.00 mm and a thickness of 1.85 mm; the negative electrode sheet has a diameter of 16.00 mm and a thickness of 0.58 mm; the electrolyte is a nonaqueous electrolyte of lithium chlorate at a concentration of 0.9 mol/L (where the solvent is composed of propylene carbonate and dimethoxyethane).

The method for preparing the positive electrode sheet includes the steps below.

Manganese dioxide, conductive carbon black and polytetrafluoroethylene emulsions are mixed uniformly in the mass ratio of 1:0.5:0.6 by the high-speed mixing device and then dried to obtain a powder which is then punched into a positive electrode sheet and an assembly current collector by a powder molding and ring assembly integrated machine to obtain the positive electrode sheet as shown in FIG. 1.

Alternatively, manganese dioxide, conductive carbon black and polytetrafluoroethylene emulsions are mixed uniformly in the mass ratio of 1:0.5:0.6 by the high-speed mixing device and then dried to obtain a powder, and a current collector ring is then punched on the surface of the positive electrode by a molding machine to obtain the positive electrode sheet as shown in FIG. 2.

The preceding description of the button cell is intended to completely illustrate the technical solutions of the present application and should not be regarded as a limitation to the present application.

### Embodiment one

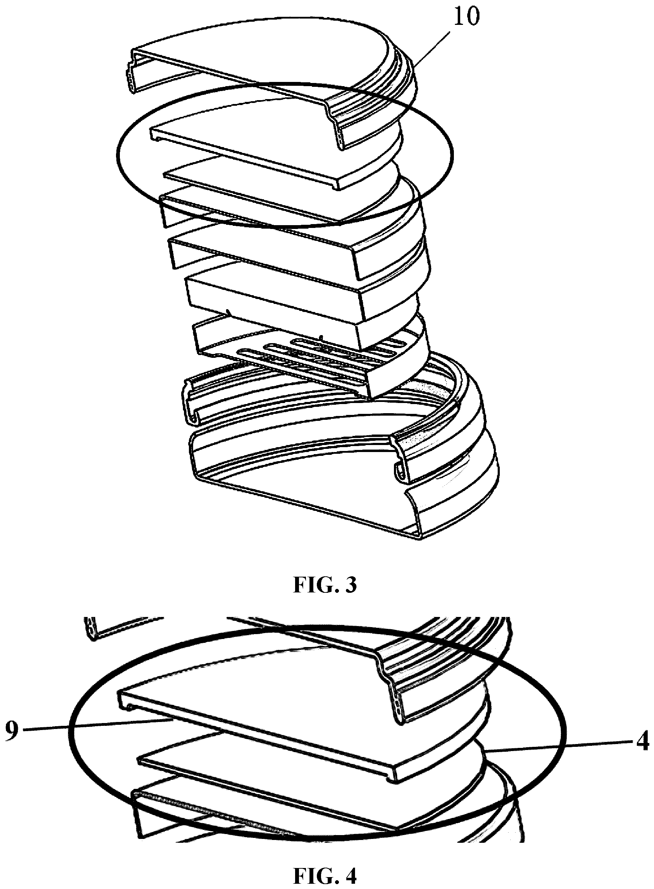

This embodiment provides a lithium primary button cell. As shown in FIGS. 3 and 4, the lithium primary button cell includes a cell housing 10, and a cell core assembly and an electrolyte that are located within the cell housing 10; the cell core assembly includes a lithium metal negative electrode 3, a circular planar negative electrode modification film 4, separators, and a manganese dioxide positive electrode 7 that are stacked sequentially; the surface of one side of the lithium metal negative electrode 3 facing the circular planar negative electrode modification film 4 is formed with a circular concave groove 9 into which the circular planar negative electrode modification film 4 is tightly embedded; the cell housing 10 includes a negative electrode bottom cover 2 located on one side of the lithium metal negative electrode 3 and a positive electrode cover 8 located on one side of the manganese dioxide positive electrode 7, and the negative electrode bottom cover 2 is provided with a sealing ring 1 disposed at the edge engagement joint of the negative electrode bottom cover 2 and the positive electrode cover 8; the separators include a combination of a glass fiber separator 5 and a polypropylene separator 6, the glass fiber diaphragm 5 is disposed on one side facing the lithium metal negative electrode 3, and the polypropylene separator 6 is disposed on one side facing the manganese dioxide positive electrode 7.

The ratio of the area of the circular planar negative electrode modification film 4 to the area of the circular concave groove 9 is 1: 1; the ratio of the area of the circular planar negative electrode modification film 4 to the area of the lithium metal negative electrode 3 is 0.45: 1; the ratio of the depth of the circular concave groove 9 to the thickness of the circular planar negative electrode modification film 4 is 0.95:1. The circular planar negative electrode modification film 4 has a thickness of 0.08 mm, a tensile strength of 0.45 KN/m, an area density of 55 g/cm², a pore diameter of 2 nm to 200 nm, and a pore volume of 0.3 cm³/g. The circular planar negative electrode modification film 4 is prepared by compression molding of a carbon material and a polytetrafluoroethylene adhesive in the mass ratio of 1:0. 15.

This embodiment further provides a method for preparing the preceding lithium primary button cell. The method includes the steps below.

As shown in FIG. 5, the circular concave groove is punched on the surface of the lithium metal negative electrode by using a circular upper mold on one side of the negative electrode bottom cover, and then the circular planar negative electrode modification film is punched into the negative electrode with the circular concave groove formed on the surface; the positioning requires that the center of the vertical projection surface of the circular planar negative electrode modification film completely coincide with the center of the circular concave groove within the negative electrode, and a precursor material is formed after being leveled by using a punching tool; then the separators are punched into the negative electrode bottom cover, the separators form a "U" shape, and a nonaqueous electrolyte is injected; then the molded manganese dioxide positive electrode sheet is placed, the positive electrode cover is finally covered, and the primary sealing and compression and the secondary sealing and compression are performed sequentially to obtain the lithium primary button cell.

### Embodiment two

The difference between this embodiment and embodiment one is that the negative electrode modification film has an annular plane shape, and the concave groove has an annular shape, where the ratio of the area of the annular planar negative electrode modification film to the area of the annular concave groove 9 is 1: 1; the ratio of the area of the annular planar negative electrode modification film to the area of the negative electrode is 0.3:1; the ratio of the depth of the annular concave groove 9 to the thickness of the annular planar negative electrode modification film is 0.95:1.

The annular planar negative electrode modification film has a thickness of 0.05 mm, a tensile strength of 0.4 KN/m, an area density of 50 g/cm², a pore diameter of 2 nm to 200 nm, and a pore volume of 0.3 cm³/g. The material of the annular planar negative electrode modification film 4 is prepared by the compression molding of the carbon material and the polytetrafluoroethylene adhesive in the mass ratio of 1:0.1. The rest is the same as in embodiment one.

### Embodiment three

The difference between this embodiment and embodiment one is that the negative electrode modification film has a square plane shape, and the concave groove has a square shape, where the ratio of the area of the square planar negative electrode modification film to the area of the square concave groove is 1:1; the ratio of the area of the square planar negative electrode modification film to the area of the negative electrode is 0.6:1; the ratio of the depth of the square concave groove to the thickness of the square planar negative electrode modification film is 0.97:1.

The square planar negative electrode modification film has a thickness of 0.10 mm, a tensile strength of 0.5 KN/m, an area density of 60 g/cm², a pore diameter of 2 nm to 200 nm, and a pore volume of 0.3 cm³/g. The material of the square planar negative electrode modification film is prepared by the compression molding of the carbon material and the polytetrafluoroethylene adhesive in the mass ratio of 1:0.2. The rest is the same as in embodiment one.

### Embodiment four

The difference between this embodiment and embodiment one is that the separators are replaced with a double-layer polypropylene separator. The rest is the same as embodiment one.

### Embodiment five

The difference between this embodiment and embodiment one is that the ratio of the area of the circular planar negative electrode modification film to the area of the negative electrode is 0.1:1. The rest is the same as embodiment one.

### Embodiment six

The difference between this embodiment and embodiment one is that the ratio of the area of the circular planar negative electrode modification film to the area of the negative electrode is 1.2:1. The rest is the same as embodiment one.

### Embodiment seven

The difference between this embodiment and embodiment one is that the ratio of the depth of the circular concave groove to the thickness of the circular planar negative electrode modification film is 0.1:1. The rest is the same as embodiment one.

### Embodiment eight

The difference between this embodiment and embodiment one is that the ratio of the depth of the circular concave groove to the thickness of the circular planar negative electrode modification film is 2: 1. The rest is the same as embodiment one.

### Embodiment nine

The difference between this embodiment and embodiment one is that the area density of the circular planar negative electrode modification film is 30 g/cm². The rest is the same as embodiment one.

### Embodiment ten

The difference between this embodiment and embodiment one is that the area density of the circular planar negative electrode modification film is 90 g/cm². The rest is the same as embodiment one.

### Embodiment eleven

The difference between this embodiment and embodiment one is that the pore volume of the circular planar negative electrode modification film is 0.02 cm³/g. The rest is the same as embodiment one.

### Embodiment twelve

The difference between this embodiment and embodiment one is that the pore volume of the circular planar negative electrode modification film is 0.7 cm³/g. The rest is the same as embodiment one.

### Embodiment thirteen

The difference between this embodiment and embodiment one is that the ratio of the mass of a carbon material active material to the mass of the polytetrafluoroethylene adhesive is 1:0.02. The rest is the same as embodiment one.

### Embodiment fourteen

The difference between this embodiment and embodiment one is that the ratio of the mass of the carbon material active material to the mass of the polytetrafluoroethylene adhesive is 1:0.4. The rest is the same as embodiment one.

### Comparative embodiment one

The difference between this comparative embodiment and embodiment one is that the negative electrode is directly punched into a flat surface, and no circular planar negative electrode modification film is provided. The rest is the same as embodiment one.

### Comparative embodiment two

The difference between this comparative embodiment and embodiment one is that the negative electrode is directly punched into the flat surface, no circular planar negative electrode modification film is provided, and the separators are replaced with the double-layer polypropylene separator. The rest is the same as embodiment one.

### Comparative embodiment three

The difference between this comparative embodiment and embodiment one is that the negative electrode is directly punched into the flat surface, and the circular planar negative electrode modification film is provided. The rest is the same as embodiment one.

### Comparative embodiment four

The difference between this comparative embodiment and embodiment one is that the negative electrode is directly punched into the flat surface, the circular planar negative electrode modification film is provided, and the separators are replaced with the double-layer polypropylene separator. The rest is the same as embodiment one.

### Comparative embodiment five

The difference between this comparative embodiment and embodiment one is that the negative electrode is directly punched into the flat surface, and the circular planar negative electrode modification film is replaced with a circular carbon material layer. A method for preparing the circular carbon material layer includes: uniformly stirring acetylene black, ethanol, and polyacrylic acid to form a slurry; transferring and coating the slurry on a polypropylene nonwoven fabric; after vacuum baking, cutting the polypropylene nonwoven fabric into a circular plane. The rest is the same as embodiment one.

### Comparative embodiment six

The difference between this comparative embodiment and embodiment one is that the negative electrode is directly punched into the flat surface, the circular planar negative electrode modification film is replaced with the circular carbon material layer, and the separators are replaced with the double-layer polypropylene separator. The method for preparing the circular carbon material layer includes: uniformly stirring acetylene black, ethanol, and polyacrylic acid to form the slurry; transferring and coating the slurry on the polypropylene nonwoven fabric; after the vacuum baking, cutting the polypropylene nonwoven fabric into the circular plane. The rest is the same as embodiment one.

### Comparative embodiment seven

The difference between this comparative embodiment and embodiment one is that the negative electrode is directly punched into the flat surface, and the circular planar negative electrode modification film is replaced with a circular carbon foil composite layer. A method for preparing the circular carbon foil composite layer includes: uniformly stirring acetylene black, ethanol, and polyacrylic acid to form the slurry; transferring and coating the slurry on a steel mesh and the polypropylene nonwoven fabric; after the vacuum baking, rolling flat the steel mesh and the polypropylene nonwoven fabric and cutting the steel mesh and the polypropylene nonwoven fabric into the circular plane. The rest is the same as embodiment one.

### Comparative embodiment eight

The difference between this comparative embodiment and embodiment one is that the negative electrode is directly punched into the flat surface, the circular planar negative electrode modification film is replaced with the circular carbon foil composite layer, and the separators are replaced with the double-layer polypropylene separator. The method for preparing the circular carbon foil composite layer includes: uniformly stirring acetylene black, ethanol, and polyacrylic acid to form the slurry; transferring and coating the slurry on the steel mesh and the polypropylene nonwoven fabric; after the vacuum baking, rolling flat the steel mesh and the polypropylene nonwoven fabric and cutting the steel mesh and the polypropylene nonwoven fabric into the circular plane. The rest is the same as embodiment one.

### Testing conditions

The negative electrode modification film 4 or the carbon foil composite layer provided in embodiments 1 to 14 and comparative embodiments 1 to 8 are tested for performance, and a testing method is as follows:

Tensile strength: the tensile strength of the diaphragm is tested using an electronic separator tensile tester; first, the negative electrode modification film 4 with a size of 100 mm × 14 mm is cut and placed between the upper and lower clamps of the tensile tester with a clamping distance of 50 mm and a preload of 0.5 N; the tensile tester is started and stretches a sample at a constant elongation rate of 10 mm/min until the sample is broken; the maximum tensile value during the stretching process is recorded.

The lithium primary button cell provided in embodiments 1 to 14 and comparative embodiments 1 to 8 is tested, and a testing method is as follows:
(1) First, at room temperature, the discharging program is 0.2 mA constant-resistance discharging for 800 h, and then the cell is placed in a refrigerator at -30°C and a refrigerator at -20°C for 4 h separately.
(2) The background current is 10 µA, then the cell is discharged with a constant-current pulse of 10 mA and 0.5 s and placed in the refrigerator for 4.5 s; this step is repeated three times, and the discharging voltage value is recorded; the temperature of the refrigerator is subsequently adjusted to -20°C, and after the cell is replaced in the refrigerator for 4 h, the preceding testing steps are repeated three times. Five cells are tested in each solution, and the average value is taken. A calculation formula for the voltage deviation is: 5 cells are tested, and the voltage deviation = (the maximum voltage value - the minimum voltage value)/ the average voltage value.

Test results are shown in Tables 1 and 2.

**Table 1**

| | Tensile strength/(kN/m) |
|---|---|
| Embodiment one | 0.45 |
| Embodiment two | 0.4 |
| Embodiment three | 0.5 |
| Embodiment four | 0.45 |
| Embodiment five | 0.45 |
| Embodiment six | 0.45 |
| Embodiment seven | 0.45 |
| Embodiment eight | 0.45 |
| Embodiment nine | 0.2 |
| Embodiment ten | 0.16 |
| Embodiment eleven | 0.1 |
| Embodiment twelve | 0.08 |
| Embodiment thirteen | 0.06 |
| Embodiment fourteen | 0.13 |
| Comparative embodiment one | / |
| Comparative embodiment two | / |
| Comparative embodiment three | 0.45 |
| Comparative embodiment four | 0.45 |

**Table 2**

| | Pulse testing at -30°C | | Pulse testing at -20°C | |
|---|---|---|---|---|
| | Pulse voltage average/V | Pulse voltage deviation | Pulse voltage average/V | Pulse voltage deviation |
| Embodiment one | 2.493 | 1.23% | 2.652 | 1.10% |
| Embodiment two | 2.487 | 1.02% | 2.632 | 0.91% |
| Embodiment three | 2.456 | 1.31% | 2.623 | 1.57% |
| Embodiment four | 2.454 | 1.75% | 2.645 | 1.81% |
| Embodiment five | 2.393 | 2.19% | 2.510 | 2.51% |
| Embodiment six | 2.441 | 2.58% | 2.617 | 1.97% |
| Embodiment seven | 2.482 | 2.89% | 2.652 | 3.16% |
| Embodiment eight | 2.332 | 3.12% | 2.485 | 3.84% |
| Embodiment nine | 2.443 | 2.82% | 2.617 | 3.01% |
| Embodiment ten | 2.468 | 3.14% | 2.621 | 3.45% |
| Embodiment eleven | 2.321 | 2.61% | 2.451 | 2.45% |
| Embodiment twelve | 2.410 | 3.01% | 2.615 | 3.21% |
| Embodiment thirteen | 2.451 | 2.38% | 2.634 | 2.01% |
| Embodiment fourteen | 2.432 | 3.24% | 2.613 | 3.38% |
| Comparative embodiment one | 1.836 | 3.26% | 2.213 | 2.91% |
| Comparative embodiment two | 1.817 | 3.23% | 2.225 | 2.85% |
| Comparative embodiment three | 2.395 | 3.15% | 2.620 | 3.56% |
| Comparative embodiment four | 2.379 | 3.54% | 2.611 | 3.23% |
| Comparative embodiment five | 2.464 | 4.14% | 2.643 | 2.86% |
| Comparative embodiment six | 2.451 | 2.94% | 2.630 | 2.05% |
| Comparative embodiment seven | 2.443 | 3.87% | 2.633 | 4.02% |
| Comparative embodiment eight | 2.412 | 2.94% | 2.631 | 3.05% |

It can be seen from Tables 1 and 2 that the tensile strength value of the negative electrode modification film 4 is positively correlated with the thickness of the negative electrode modification film and positively correlated with the content of polytetrafluoroethylene, and the pore volume and area density parameters of the negative electrode modification film 4 can also affect the tensile strength value. It can be seen from the comparison between embodiments one and four that the glass fiber separator 5 is disposed on the side facing the negative electrode 3, and the polypropylene separator 6 is disposed on the side facing the positive electrode 7, so as to achieve the functionality matching with the negative electrode modification film 4.

It can be seen from the comparison between embodiments one, five and six that the ratio of the area of the circular planar negative electrode modification film to the area of the negative electrode is regulated in the present application so that the functionality of the circular planar negative electrode modification film can be fully exerted.

It can be seen from the comparison between embodiments one, seven and eight that the ratio of the depth of the circular concave groove to the thickness of the circular planar negative electrode modification film is regulated in the present application so that the negative electrode modification film and the surface of the negative electrode can be completely flush and have certain good physical bonding.

It can be seen from the comparison between embodiments one, nine and ten that the area density of the circular planar negative electrode modification film is regulated in the present application so that the negative electrode modification film can have excellent comprehensive functionality.

It can be seen from the comparison between embodiments one, eleven and twelve that the pore volume of the circular planar negative electrode modification film is regulated in the present application so that the functionality of the modification film can be fully exerted.

It can be seen from the comparison between embodiments one, thirteen and fourteen that the ratio of the mass of the active material to the mass of the adhesive is regulated so that the negative electrode modification film can have excellent functionality such as conductivity, adsorption, and flexible self-support.

It can be seen from the comparison between embodiment one and comparative embodiments one to four that the surface of the side of the negative electrode 3 facing the negative electrode modification film 4 is not formed with the concave groove 9 so that the negative electrode 3 and the negative electrode modification film 4 has poor bonding and a risk of falling off from each other. It is precisely because the negative electrode modification film and the negative electrode that are provided in the present application have good lamination tightness that the pulse voltage of the lithium primary button cell in the pulse testing at low temperature has good consistency after a certain discharging depth.

It can be seen from the comparison between embodiment one and comparative embodiments five to eight that the circular carbon material layer or the circular carbon foil composite layer that is disclosed in the related art cannot achieve all the technical effects of the negative electrode modification film provided in the present application.

The present application provides the lithium primary button cell. First, in the present application, the surface of the negative electrode is formed with the concave groove so that the negative electrode modification film can be tightly embedded into the concave groove, and the present application has the following effects: ① The lamination tightness, lamination flatness and center alignment between the negative electrode modification film and the negative electrode can be improved, not only ensuring the structural stability of the cell core assembly, but also improving the structural stability of the cell core assembly in the reliability testing; for example, under the long-term vibration, drop or centrifugal environment testing at room temperature or high temperature, there is still no displacement between the negative electrode and the negative electrode modification film, thereby enhancing the lamination stability between the negative electrode modification film and the negative electrode at the high discharging depth and ensuring the stability of the large current discharging or pulse discharging performance of the cell core assembly at room temperature and extremely low temperature; ② the storage space for accommodating the negative electrode modification film is reserved within the negative electrode, not only ensuring that the negative electrode modification film cannot be deformed during the punching process, but also improving the flatness of the entire material composite surface of the negative electrode. Second, the negative electrode modification film provided in the present application has the following advantages: ① The negative electrode modification film has the porous structure. On one hand, due to the influence of the potential during the reaction of the cell, the positive electrode active substance reacts with some minor components in the nonaqueous electrolyte to form the free cations or anions. Moreover, since the liquid absorption capacity of the separators is stronger than the liquid absorption capacity of the positive electrode active substance in the cell, the concentration polarization effect exists, which makes it possible for the dissolved positive electrode active substance ions to shuttle through the separators, thereby causing the irreversible side reaction with the negative electrode to form the reaction interface of the high internal resistance. The negative electrode modification film provided in the present application has strong ion adsorption function due to the abundant mesopores and micropores, which can well adsorb the dissolved positive electrode active ions in the pore structure and finally effectively prevent the dissolved positive electrode active ions from being transferred to the surface of the negative electrode for the side reaction. On the other hand, some components in the nonaqueous electrolyte further react with the negative electrode to form the SEI film which is easily broken down in the early cycle of the cell, and in the later cycle, as the negative electrode is continuously consumed, the interfacial impedances between the SEI film and the separators and the positive electrode also increase. In this case, if the negative electrode contacts too much free electrolyte, the high-impedance interfacial film is easier to form, obstructing the ion transmission. The porous structure in the negative electrode modification film provided in the present application has strong adsorption performance and thereby can adsorb the free electrolyte in the modification film at the end of the discharging, thereby reducing the degree of the free electrolyte contacting the negative electrode and improving the discharging performance of the cell. Moreover, the pore structure of the negative electrode modification film may be freely regulated according to the selection of the raw materials and the processing techniques of the film. ② The negative electrode modification film is the multifunctional layer. The modification film has good conductivity and can form the near-capacitor structure with the positive electrode layer, thereby having certain capacitive characteristics. When the cell is in the low temperature environment, the preceding capacitor structure can provide a certain amount of charges at the instant of the reaction. Moreover, the benign contact is generated between the modification film and the negative electrode, and the certain affinity action is formed between the particles, thereby changing the original state of the passivation layer so that when the electrons are turned on, the lithium ions can easily pass through the passivation layer to ensure that the ions can penetrate the passivation layer, thereby shortening the ion conduction and thus increasing the instantaneous recovery voltage value. Moreover, the modification layer can increase the conduction rate of ions and electrons of the cell during the discharging process, ensuring that the cell can have the large current output capability. Additionally, the negative electrode modification film provided in the present application has a good affinity with the negative electrode and can modify the passivation layer on the surface of the negative electrode, thereby better protecting the negative electrode from the erosion by the dissolved positive electrode cations.③ The negative electrode modification film has high strength and good flexibility. The tensile strength of the prepared negative electrode sheet is as high as 0.4 kN/m to 0.5 kN/m, which can ensure the integrity of the negative electrode modification film during the cutting process of the electrode sheet, the processability of the negative electrode modification film during the assembly process of the cell and the integrity of the negative electrode modification film during the encapsulation of the cell. Moreover, due to the good flexibility of the negative electrode modification film, when the negative electrode modification film is laminated with the negative electrode, the stress between the negative electrode modification film and the negative electrode can be reduced to avoid the uneven lamination and the uneven lamination surface, and the lamination cannot dissolve or deform under the infiltration of the nonaqueous electrolyte and after the deep discharging.④ The negative electrode modification film has high flatness, and the deviation of the thickness range of the negative electrode modification film is only within 3 µm, which reduces the process difficulty when the negative electrode modification film is embedded into the surface of the negative electrode, ensures the lamination flatness of the negative electrode modification film and the negative electrode, reduces the gap between the negative electrode modification film and the negative electrode, and finally improves the interfacial contact performance between the negative electrode modification film and the negative electrode. ⑤ The negative electrode modification film is a self-supporting and integrated function film, which can not only reduce the interfacial resistance of the ion conduction, but also avoid the side reaction between the negative electrode modification film and the cell system or the insufficient effective space for the cell core assembly due to the introduction of the other matrix materials. Additionally, the processing technique of the negative electrode modification film provided in the present application is simple, and the thickness of the negative electrode modification film is not affected by the thickness of the matrix layer. The overall thickness can be as low as 30 µm, and the uniformity of the negative electrode modification film is also not affected by the material and flatness of the substrate layer.

## Claims

1. A lithium primary button cell, comprising a cell housing (10) and a cell core assembly located within the cell housing (10), wherein the cell core assembly comprises a negative electrode (3), a negative electrode modification film (4), a separator (5,6), and a positive electrode (7) that are stacked sequentially; and
wherein a surface of a side of the negative electrode (3) facing the negative electrode modification film (4) is formed with a concave groove (9), and the negative electrode modification film (4) is tightly embedded into the concave groove (9).

2. The lithium primary button cell of claim 1, wherein a shape of the concave groove (9) comprises any one or a combination of at least two of a circle, a ring, or a regular polygon; and
a center of the concave groove (9) coincides with a center of a vertical projection surface of the negative electrode modification film (4).

3. The lithium primary button cell of claim 1 or 2, wherein a ratio of an area of the negative electrode modification film (4) to an area of the concave groove (9) is 1:1;
a ratio of the area of the negative electrode modification film (4) to an area of the negative electrode (3) is (0.2 to 0.99): 1; and
a ratio of a depth of the concave groove (9) to a thickness of the negative electrode modification film (4) is (0.3 to 1.3): 1.

4. The lithium primary button cell of any one of claims 1 to 3, wherein the thickness of the negative electrode modification film (4) ranges from 0.03 mm to 0.20 mm;
a tensile strength of the negative electrode modification film (4) ranges from 0.1 KN/m to 2 KN/m;
an area density of the negative electrode modification film (4) ranges from 40 g/cm² to 80 g/cm²; and
a pore volume of the negative electrode modification film (4) is 0.05 cm³/g to 0.5 cm³/g.

5. The lithium primary button cell of any one of claims 1 to 4, wherein a material of the negative electrode modification film (4) comprises an active material and an adhesive; the active material comprises at least one of an oxide material, a carbon material, a metal conductive particle, or a fluorine-containing particle;
the adhesive comprises at least one of polytetrafluoroethylene, polyvinylidene fluoride, a fluorinated ethylene propylene copolymer, or polyacrylic acid; and
a ratio of a mass of the active material to a mass of the adhesive is 1 :(0.03 to 0.3).

6. The lithium primary button cell of any one of claims 1 to 5, wherein the separator (5,6) comprises a glass fiber separator, a polypropylene separator, or a combination of a glass fiber separator and a polypropylene separator; and
the separator (5,6) comprises 1 to 3 layers.

7. The lithium primary button cell of any one of claims 1 to 6, wherein the cell housing (10) comprises a negative electrode bottom cover (2) located on a side of the negative electrode (3) and a positive electrode cover (8) located on a side of the positive electrode (7);
the negative electrode bottom cover (2) is provided with a sealing ring (1) disposed at an edge engagement joint of the negative electrode bottom cover (2) and the positive electrode cover (8); and
the lithium primary button cell further comprises an electrolyte.

8. A method for preparing the lithium primary button cell of any one of claims 1 to 7, comprising:
punching the negative electrode modification film (4) into the negative electrode (3) with the concave groove (9) formed on the surface of the negative electrode (3) to form a precursor material;
sequentially stacking the precursor material, the separator (5,6), and the positive electrode (7) to obtain the cell core assembly; and
encapsulating the cell core assembly and the cell housing (10) to obtain the lithium primary button cell.

9. The method for preparing the lithium primary button cell of claim 8, after punching the negative electrode modification film (4) into the negative electrode (3) with the concave groove (9) formed on the surface, further comprising:
leveling a lamination surface between the negative electrode modification film (4) and the concave groove (9).

10. An electronic device, comprising the lithium primary button cell of any one of claims 1 to 7.
